Europäisches Patentamt

European Patent Office

Office européen des brevets

(11) Publication number: **0 428 155 A2**

(12) **EUROPEAN PATENT APPLICATION**

(21) Application number: **90121793.5**

(22) Date of filing: **14.11.90**

(51) Int. Cl.5: **G11B 11/10**

(30) Priority: **14.11.89 JP 293901/89**
**14.11.89 JP 293902/89**
**14.11.89 JP 293903/89**
**21.09.90 JP 250093/90**
**21.09.90 JP 250094/90**
**21.09.90 JP 250095/90**

(43) Date of publication of application:
**22.05.91 Bulletin 91/21**

(84) Designated Contracting States:
**DE FR GB NL**

(71) Applicant: **UBE INDUSTRIES, LTD.**
**12-32, Nishihonmachi 1-chome**
**Ube-shi, Yamaguchi-ken(JP)**

(72) Inventor: **Gomi, Manabu**
**10-3, Sugano 6-chome**
**Ichikawa-shi, Chiba-ken(JP)**
Inventor: **Abe, Masanori**
**6-705, Mishimine-machi, Oota-ku**
**Tokyo(JP)**
Inventor: **Ohdan, Kyoji**
**Kamiube Nakao**
**Ube-shi, Yamaguchi-ken(JP)**
Inventor: **Fujimoto, Tetsuya**
**3430-1, Oaza Higashisue**
**Ube-shi, Yamaguchi-ken(JP)**
Inventor: **Kumura, Yuji**
**2890-1, Oaza Kamiube**
**Ube-shi, Yamaguchi-ken(JP)**

(74) Representative: **Kraus, Walter, Dr. et al**
**Patentanwälte Kraus, Weisert & Partner**
**Thomas-Wimmer-Ring 15**
**W-8000 München 22(DE)**

(54) Rare earth-iron-garnet fine particles and magneto-optical material using the same.

(57) Rare earth-iron-garnet fine particles represented by the general formula

$$R_a Bi_b Fe_c M_d O_e \quad (I)$$

(in the formula, R represents at least one rare earth element selected from the group consisting of Y and lanthanum series elements; M represents at least one element selected from the group consisting of Al, Ga, Cr, Mn, Sc, In, Ru, Rh, Co, Fe(II), Cu, Ni, Zn, Li, Si, Ge, Zr, Ti, Hf, Sn, Pb, Mo, V, Nb and Ta; a is a number of 0.5 to 3.5; b is a number of 0 to 2.5; c is a number of 3.0 to 6.0; d is a number of 0 to 2.0; The sum of a, b, c and d is in the range of 7.0 to 8.0; the sum of a and b is in the range of 2.0 to 3.5; the sum of c and d is in the range of 4.0 to 6.0; and e is the ratio of the number of oxygen atoms sufficient for valence compensation) and having an average particle diameter in the range of 30 Å to 1,000 Å, the particles being useful in a magneto-optical apparatus such as optical isolator, optical circulator, optical switch, optical waveguide, optical memory (magneto-optical recording medium) and the like.

# RARE EARTH-IRON-GARNET FINE PARTICLES AND MAGNETO-OPTICAL MATERIAL USING THE SAME

The present invention relates to a rare earth-iron-garnet fine particles having excellent magneto-optical properties, as well as to a magneto-optical apparatus using said particles, such as optical isolator, optical circulator, optical switch, optical waveguide, optical memory (magneto-optical recording medium) and the like.

As the magnetic material having excellent magneto-optical effect, there have heretofore been known magnetic materials consisting of an amorphous alloy of rare earth metal(s) and transition metal(s).

These magnetic materials consisting of said amorphous ally, however, have a drawback in that they easily undergo oxidation and corrosion and resultantly have reduced magneto-optical properties. Further, amorphous alloys which have low light transmission and utilize a magneto-optical effect caused by light reflection on the surface (i.e. Kerr effect), have a problem of low sensitivity because they generally have a small angle of Kerr rotation.

Meanwhile, a magneto-optical material using a thin film of garnet polycrystalline oxide is proposed in DE 2318798. This magnetic material using said oxide has excellent corrosion resistance and, because it utilizes an magneto-optical effect caused by light transmission through the magnetic film (i.e. Faraday effect), has an advantage of high sensitivity. The magnetic material, however, has a drawback in that since it is polycrystalline, it produces big noise owing to light scattering at the grain boundaries, double reflection and movement of domain walls.

With said magnetic thin film, there is also a problem that when the magnetic thin film is formed on a substrate by deposition, the substrate must be heat-resistant because the deposition is effected at a high temperature of 500°C or higher.

A magneto-optical recording material to be applied by coating, using yttrium-iron-garnet particles is disclosed in Japanese Patent Application Kokai (Laid-Open) No. 119758/1987. Magneto-optical recording media formed by coating said type of material have no problem caused by grain boundaries as seen in the thin film of polycrystalline oxide; however, the garnet particles described in the above document have a large average particle diameter of 1.5 m and thereby cause light scattering, and accordingly are unsuited for the applications utilizing a light of submicron wavelength.

An object of the present invention is to solve the above-mentioned problems and provide a rare earth-iron-garnet fine particles having excellent corrosion resistance, large magneto-optical effect and excellent light transmission.

Another object of the present invention is to provide a magneto-optical material using said rare earth-iron-garnet fine particles.

Still another object of the present invention is to provide a magneto-optical apparatus using said rare earth-iron-garnet fine particles, such as optical isolator, optical circulator, optical switch, optical waveguide, optical memory (magneto-optical recording medium) and the like.

A specific object of the present invention is to provide an optical memory (magneto-optical recording medium) using said rare earth-iron-garnet fine particles.

Other objects and characteristics of the present invention will become apparent from the following description.

According to the present invention, there is provided rare earth-iron-garnet fine particles represent ed by the general formula

$$R_a Bi_b Fe_c M_d O_e \quad (I)$$

(in the formula,

R represents at least one element selected from the group consisting of Y and lanthanum series elements,

M represents at least one element selected from the group consisting of Al, Ga, Cr, Mn, Sc, In, Ru, Rh, Co, Fe(II), Cu, Ni, Zn, Li, Si, Ge, Zr, Ti, Hf, Sn, Pb, Mo, V, Nb and Ta,

a is a number of 0.5 to 3.5,

b is a number of 0 to 2.5,

c is a number of 3.0 to 6.0,

d is a number of 0 to 2.0,

the sum of a, b, c and d is in the range of 7.0 to 8.0,

the sum of a and b is in the range of 2.0 to 3.5,

the sum of c and d is in the range of 4.0 to 6.0, and

e is the ratio of the number of oxygen atoms sufficient for valence compensation)

and having an average particle diameter in the range of 30 Å to 1,000 Å.

The rare earth-iron-garnet fine particles according to the present invention have a basic structure of rare earth-iron-garnet represented by the following formula (II)

$$R_3 Fe_5 O_{12} \quad (II)$$

(R has the same definition as above), and includes even rare earth-iron-garnet fine particles obtained by substituting part of the rare earth element R of the above formula (II) with Bi and/or rare earth-iron-garnet fine particles obtained by substituting part of the Fe of the above formula (II) with at least one other metal element M.

The rare earth element represented by R is at least one element selected from the group consisting of Y and lanthanum series elements, namely La, Ce, Pr, Nd, Pm, Sm, Eu, Gd, Tb, Dy, Ho, Er, Tm, Yb and Lu. Of these, preferable are Y, La, Ce, Nd, Sm, Gd, Tb, Dy, Yb, etc.; and particularly preferable are Y, Ce, Gd, Tb and Dy.

The substitution of part of the rare earth element R with Bi can give rare earth-iron-garnet fine particles having a large angle of Faraday rotation. The substitution of part of Fe with other metal element(s) M can give rare earth-iron-garnet fine particles of lower Curie temperature and smaller saturation magnetization.

Further, in the rare earth-iron-garnet fine particles of the present invention, part of the rare earth element R may be substituted with bivalent elements such as Pb, Ca, Mg and the like. In this case, it is possible to make valence compensation with tetra- or pentavalent element(s) selected from the metal elements M.

The metal element M which may substitute part of the iron element Fe in the rare earth-iron-garnet of the formula (II), is at least one metal element selected from the group consisting of Al, Ga, Cr, Mn, Sc, In, Ru, Rh, Co, Fe(II), Cu, Ni, Zn, Li, Si, Ge, Zr, Ti, Hf, Sn, Pb, Mo, V, Nb and Ta. Of the above metal elements, the trivalent metal elements [i.e. Al, Ga, Cr, Mn, Sc, In, Ru, Rh and Co (III)) can substitute part of the iron element F, alone or in combination of two or more; meanwhile, the bivalent metal elements [i.e. Co (II), Fe (II), Cu, Ni and Zn] or the monovalent metal element Li can substitute part of the iron element F, preferably by appropriately combining with tetravalent metal elements (Si, Ge, Zr, Ti, Hf, Sn, Pb, Mo) and/or pentavalent metal elements (V, Ta, Nb) so as to give a total valence of three. Of the above metal elements M, preferable are Al, Ga, In, Co, Si, Ge, Ti, V, etc.

When in the general formula (I) there is used, as the "$M_d$" [the metal element substituting part of the iron element Fe in the formula (II)), a metal combination represented by

$M^1{}_\alpha . M^2{}_\beta$

(in the formula,
$M^1$ represents at least one element selected from the group consisting of Co and Rh,
$M^2$ represents at least one element selected from the group consisting of Al, Ga, Cr, Mn, Sc, In, Ru, Fe (II), Cu, Ni, Zn, Li, Si, Ge, Zr, Ti, Hf, Sn, Pb, Mo, V, Nb and Ta,
$\alpha$ is a number of 0.1 to 2.0, preferably 0.2 to 1.5, more preferably 0.2 to 1.0,
$\beta$ is a number of 0 to 2.0, preferably 0.1 to 1.5, more preferably 0.1 to 1.0, and
the sum of $\alpha$ and $\beta$ is in the range of 0.1 to 2.0, preferably 0.3 to 1.5), there can be obtained a rare earth-iron-garnet fine particles having magnetic anisotropy, a low Curie temperature and a small saturation magnetization.

In the general formula (I), the a, b, c, d and e each representing the ratio of the number of atoms of the constituent element R, Bi, Fe, M or O, can take the following values.
a = 0.5 - 3.5, preferably 0.5 - 2.5, more preferably 1.0 - 2.0
b = 0 - 2.5, preferably 0.5 - 2.5, more preferably 1.0 - 2.0
c = 3.0 - 6.0, preferably 3.5 - 5.0, more preferably 3.8 - 5.0
d = 0 - 2.0, preferably 0 - 1.5, more preferably 0 - 1.2
e is the ratio of the number of oxygen atoms sufficient for valence compensation and varies depending upon the values of a, b, c and d and the type of M, but ordinarily is 10 - 13, preferably 10.5 - 12, more preferably 10.8 - 12.

The sum of a, b, c and d is 7.0 - 8.0, preferably 7.2 - 8.0, more preferably 7.5 - 8.0.

The sum of a and b is 2.0 - 3.5, preferably 2.5 - 3.5, more preferably 3.0 - 3.5.

The sum of c and d is 4.0 - 6.0, preferably 4.0 - 5.5, more preferably 4.2 - 5.0.

When the rare earth-iron-garnet fine particles of the present invention are used particularly in an optical memory, i.e. a magneto-optical recording medium, the above a, b, c and d preferably have the following values, respectively.
a = 0.5 - 3.0, particularly 1.0 - 2.0
b = 0.25 - 2.5, particularly 1.0 - 2.0
c = 3.0 - 5.0, particularly 3.8 - 5.0
d = 0 - 2.0, particularly 0 - 1.2

The rare earth-iron-garnet fine particles of the present invention are also characterized by having very small particle diameters, and their average particle diameter is in the range of 30 Å to 1,000 Å, preferably 100 Å to 600 Å, more preferably 100 Å to 500 Å. When the average particle diameter is smaller than 30 Å, the rare earth-iron-garnet fine particles tend to have superparamagnetism owing to thermal disturbance; when the average particle diameter is larger than 1,000 Å, the rare earth-iron-garnet fine particles tend to cause light scattering and produce frequent noise when used in magneto-optical apparatuses.

The rare earth-iron-garnet fine particles of the present invention have no particular restriction in their particle shape and can be in shapes such as polyhedron, plate, needle, amorphous shape and the like. However, there is preferred generally an optically symmetric shape, particularly a spherical shape.

In the present specification, the "average particle diameter" of the rare earth-iron-garnet fine particles can be defined as an average value of the longest axes of 400 fine particles randomly selected when the fine particles are observed with a transmission electron microscope (TEM).

The method for producing the rare earth-iron-garnet fine particles of the present invention has no particular restriction as long as it can produce rare earth-iron-garnet fine particles having the above-mentioned properties. Said fine particles can be produced by any conventional method for producing a magnetic powder, such as hydrothermal synthesis method, co-precipitation method, fusion method, alkoxide method, vapor phase method or the like.

The method for producing the rare earth-iron-garnet fine particles of the present invention is specifically described below, on the case of co-precipitation method.

A solution containing ions of the elements of the types and amounts constituting the rare earth-iron-garnet epresented by the general formula (I) is mixed with an alkali so that the alkali concentration in the resulting mixture becomes 0.1 - 8 m/ℓ, to form a precipitate; and the precipitate is subjected to burning at 600 - 900°C to obtain rare earth-iron-garnet fine particles.

The above solution containing ions of required elements can be obtained by dissolving soluble compounds (e.g. nitrates, sulfates, chlorides) of required elements in a solvent.

The solvent can be any as long as it can dissolve said compounds. There are generally used water, alcohols, ethers and their mixtures.

It is preferred that the solution containing ions of required elements be prepared so that the total ion concentration in the slurry after formation of precipitate is 0.01 - 2.0 m/ℓ. When the total ion concentration is less than 0.01 M/ℓ, the amount of garnet formed is small. When the total ion concentration is more than 2.0 M/ℓ, the resulting particles are large and a heterophase is also formed.

The proportions of ions of required elements in the solution can be the same as the proportions of constituent elements in the rare earth-iron-garnet of the general formula (I), but R and Bi may be used each up to 10 % in excess of the required amount.

As the alkali, there are used sodium hydroxide, potassium hydroxide, ammonia water, diethylamine, ethanolamine, etc. The alkali should be used in such an amount that the alkali concentration in the mixture with the solution containing ions of required elements become 0.1 - 8 M/ℓ, preferably 0.5 - 2 M/ℓ. When the amount of the alkali is too small, the resulting particles are large and unreacted materials remain. The use of alkali in large excess is uneconomical.

The mixing of the solution containing ions of required elements, with the alkali can be effected by, for example, a method wherein the solution is added to an aqueous alkali solution, or a method wherein the two solutions are mixed continuously. The formation of precipitate may be effected in one stage or a plurality of stages.

Next, the resulting precipitate is washed with water to remove free alkali, filtered, dried and burnt to obtain rare earth-iron-garnet fine particles. The temperature of burning varies depending upon the composition of rare earth-iron-garnet produced, but can generally be in the range of 600 - 900°C. When the temperature is too low, there takes place no sufficient crystallization. When the temperature is too high, the particles obtained are large and sintering among particles takes place. The appropriate time of burning is about 10 minutes to 30 hours. The atmosphere used in burning has no particular restriction, but generally air is used conveniently.

The rare earth-iron-garnet fine particles of the present invention can be used as a magneto-optical material by dispersing them in an inorganic or organic binder.

As the inorganic binder used in the preparation of the magneto-optical material, there can be mentioned, for example, amorphous inorganic oxides obtained by heat-treating an aqueous solution containing nitrates of the elements constituting the garnet composition of the general formula (I), a peptization product of a garnet composition produced by co-precipitation and neutralization, a metal alcholate, a silanol compound or its derivative, an orgnaosilicon compound, a metal salt of acetylacetone, or the like; molten glass; and so forth.

As the organic binder, there can be mentioned, for example, a vinyl chloride-vinyl acetate copolymer, a vinyl chloride-vinylidene chloride copolymer, a cellulose derivative (e.g. nitrocellulose resin), an acrylic resin, a polyvinyl acetal resin, a polyvinyl butyral resin, an epoxy resin, a polyurethane resin, a phenoxy resin, a polyester resin, a phenolic resin, a polyamide resin, a melamine resin, etc.

It is preferable that these binders have a refractive index close to that of the rare earth-iron-garnet fine particles to be dispersed therein, in order to minimize the occurrence of noise due to light scattering. Desirably, the binders have a refractive index deviating from the refractive index of the rare earth-iron-garnet fine particles by not more than ± 20 %, particularly ± 10 % of the latter refractive index.

Hence, the magneto-optical material containing the rare earth-iron-garnet fine particles of the present invention can find wide applications in magneto-optical fields, such as optical isolator, optical circulator, optical switch, optical waveguide, optical memory and the like.

In using in such applications, the rare earth-iron-garnet fine particles of the present invention are dispersed or dissolved in water or an organic solvent together with the above-mentioned binder; the resulting dispersion or solution is applied onto an appropriate substrate or casted into an appropriate mold, and is subjected to a curing treatment such as heat treatment or the like; thereby, a magneto-optical apparatus usable in the above-mentioned applications can be obtained.

This magneto-optical apparatus has excellent corrosion resistance, large magneto-optical effect and excellent light transmission, and can be suitably used in, for example, optical isolator, optical circulator, optical switch, optical waveguide and optical memory.

The magneto-optical apparatus comprising a substrate and a magneto-optical layer applied thereon, comprising a binder and the rare earth-iron-garnet fine particles of the present invention can be used particularly suitably as a magneto-optical recording medium. The preferable thickness of the magneto-optical layer is generally 0.05 - $2\mu m$, particularly 0.2 - 1 $\mu m$ in view of the stability of recorded bit.

The substrate has no particular restriction, and there can be used various substrates, for example, inorganic material substrates such as single crystal substrate, polycrystal substrate, inorganic amorphous substrate (e.g. glass), composite substrate and the like, and organic material substrates such as acrylic resin substrate, polycarbonate resin substrate, polyester resin substrate, polyamide resin substrate, polyamide resin substrate and the like.

It is possible to provide a light-reflecting layer between the substrate and the magneto-optical layer or on the surface of the magneto-optical layer. As the light-reflecting layer, there are used Cu, Cr, Al, Ag, Au, TiN, etc. This light-reflecting layer can be applied on the substrate of the magneto-optical layer by coating method, plating method, vapor deposition method, etc.

In the production of the magneto-optical recording medium, when there is used a binder which causes shrinkage or expansion at the time of curing and thereafter maintains the shrinked or expanded state, or a substrate which causes shrinkage or expansion at the time of treatment such as heating or application of actinic ray and thereafter maintains the shrinked or expanded state, the magneto-optical layer undergoes stress as the result of the above shrinkage or expansion of the binder or substrate, whereby the rare earth-iron-garnet fine particles in the magneto-optical layer can have magnetic anisotropy caused by inverse-magnetostrictive effect (the magnetization of the garnet fine particles can be made in one direction perpendicular to the substrate).

In general, such veritcal magnetic anisotropy appears when the vertical magnetic anisotropy $K\perp$

represented by

$$K\perp = -3/2\lambda_s\sigma - 2\pi M_s^2$$

($\lambda_s$ is the magnetostriction constant of magnetic fine particles; $M_s$ is magnetization; $\sigma$ is the in-plane stress applied to fine particles ($\sigma > 0$ in the case of tensile stress) satisfies $K\perp > 0$.

Therefore, vertical magnetic anisotropy can be obtained by appropriately setting $\sigma$ and $M_s$ so that $K\perp > 0$ can be satisfied.

For example, when $\lambda_s > 0$, it is sufficient to apply a compression stress ($\sigma < 0$) to the fine particles, and when $\lambda_s < 0$, it is sufficient to apply a tensile stress ($\sigma > 0$) to the fine particles.

As the binder which can apply a stress to the fine particles, there can be mentioned, for example, the above-mentioned binders. As the substrate which can apply a stress to the fine particles, there can be men tioned, ultraviolet- or radiation-curing resin substrates and shape memory alloy substrates.

In the above magneto-optical recording medium, the rare earth-iron-fine particles can be subjected to an orientation treatment by applying an external magnetic filed in a direction perpendicular to the substrate. In utilizing this orientation treatment by magnetic filed, it is desirable to use, in the magneto-optical layer, a binder which causes no significant shrinkage or expansion at the time of curing.

In the thus obtained magneto-optical recording medium, to magneto-optical layer can have a magnetic coercive force of generally 0.5 $kO_e$, preferably 1 - 20 $kO_e$.

In said magneto-optical recording medium, recording can be conducted in the form of bit by an ordinary method, for example, by applying a laser beam to the recording medium to momentarily increase the temperature of the laser beam-applied sports and thereby to make small the coercive force of the spots and resultantly reversing the magnetization in the direction of bias magnetic field.

In the accompanying drawings, Fig. 1 is an X-ray diffraction spectrum of the garnet fine particles obtained in Example 1; and Fig. 2 and Fig. 3 are Faraday hystereses to a light of 633 nm, of the magneto-optical recording media obtained in Example 11 and Comparative Example 3, respectively.

The present invention is specifically described below by way of Examples.

Example 1

1.18 M of sodium hydroxide (NaOH) was dissolved in 80 ml of water. Separately, 0.122 M of yttrium nitrate [$Y(NO_3)_3 \cdot 6H_2O$] and 0.203 M of fer-

ric nitrate [$Fe(NO_3)_3.9H_2O$] were dissolved in 80 ml of water. The resulting nitrate solution was slowly added in drops to the above sodium hydroxide solution with stirring, to effect neutralization, whereby a precipitate was formed.

The precipitate was water-washed, filtered, dried and then burnt at 800°C to obtain garnet fine particles.

The garnet fine particles had an average particle diameter of 390 Å and were found, by X-ray diffraction method for powder and compositional analysis, to consist of a garnet single phase having a composition of $Y_{3.0}Fe_{5.0}O_{12}$.

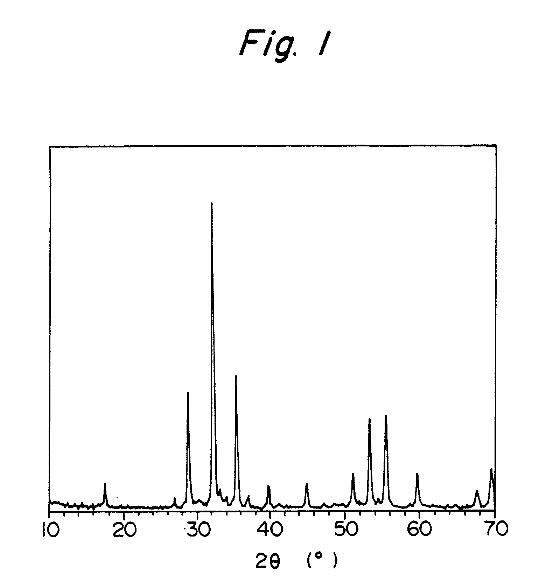

The X-ray diffraction spectrum for the garnet fine particles is shown in Fig. 1.

Example 2

2.67 M of sodium hydroxide was dissolved in 80 ml of water. Separately, 0.033 M of bismuth nitrate [$Bi(NO_3)_3.5H_2O$],0.033 M of yttrium nitrate and 0.109 M of ferric nitrate were dissolved in 220 ml of a 5 N nitric acid solution. The resulting nitric acid solution was slowly added in drops to the above sodium hydroxide solution with stirring, to effect neutralization, whereby a precipitate was formed.

The precipitate was water-washed, filtered, dried and then burnt at 700°C to obtain garnet fine particles.

The garnet fine particles had an average particle diameter of 380 Å and were found, by X-ray diffraction method for powder and compositional analysis, to consist of a garnet single phase having a composition of $Y_{1.5}Bi_{1.5}Fe_{5.0}O_{12}$.

Example 3

1.93 M of sodium hydroxide was dissolved in 80 ml of water. Separately, 0.030 M of bismuth nitrate, 0.030 M of gadolinium nitrate [$Gd(NO_3)_3.6H_2O$], 0.085 M of ferric nitrate and 0.016 M of aluminum nitrate [$Al(NO_3)_3.9H_2O$] were dissolved in 220 ml of a 5 N nitric acid solution. The resulting nitric acid solution was slowly added in drops to the above sodium hydroxide solution with stirring, to effect neutralization, whereby a precipitate was formed.

The precipitate was water washed, filtered, dried and then burnt at 700°C to obtain garnet fine particles.

The garnet fine particles had an average particle diameter of 420 Å and were found, by X-ray diffraction method for powder and compositional analysis, to consist of a garnet single phase having a composition of $Gd_{1.5}Bi_{1.5}Fe_{4.2}Al_{0.8}O_{12}$.

Example 4

2.67 M of sodium hydroxide was dissolved in 80 ml of water. Separately, 0.033 M of yttrium chloride [$YCl_3.6H_2O$], 0.033 M of bismuth chloride [$BiCl_3$], 0.083 M of ferric chloride [$FeCl_3.6H_2O$], 0.013 M of cobalt chloride [$CoCl_2.6H_2O$] and 0.013 M of titanium chloride [$TiCl_4$) were dissolved in 220 ml of a 5 N nitric acid solution. The resulting nitric acid solution was slowly added in drops to the above sodium hydroxide solution with stirring, to effect neutralization, whereby a precipitate was formed.

The precipitate was water-washed, filtered, dried and then burnt at 700°C to obtain garnet fine particles.

The garnet fine particles had an average particle diameter of 430 Å and were found, by X-ray diffraction method for powder and compositional analysis, to consist of a garnet single phase having a composition of $Y_{1.5}Bi_{1.5}Fe_{3.8}Co_{0.6}Ti_{0.6}O_{12}$.

Example 5

1.93 M of sodium hydroxide (NaOH) was dissolved in 80 ml of water. Separately, 0.030 M of bismuth nitrate [$Bi(NO_3)_3.5H_2O$], 0.030 M of dysprosium nitrate [$Dy(NO_3)_3.5H_2O$], 0.085 M of ferric nitrate [$Fe(NO_3)_3.9H_2O$) 0.085 M of ferric nitrate [$Fe(NO_3)_3.9H_2O$] and 0.016 M of aluminum nitrate [$Al(NO_3)_3.9H_2O$] were dissolved in 220 ml of a 5 N nitric acid solution. The resulting nitric acid solution was slowly added in drops to the above sodium hydroxide solution with stirring, to effect neutralization, whereby a precipitate was formed.

The precipitate was water-washed, filtered, dried and then burnt at 700°C to obtain garnet fine particles.

The garnet fine particles had an average particle diameter of 380 Å and were found, by X-ray diffraction method for powder and compositional analysis, to consist of a garnet single phase having a composition of $Dy_{1.5}Bi_{1.5}Fe_{4.2}Al_{0.8}O_{12}$.

Also, the garnet fine particles had a refractive index of 2.6.

The fine particles were added to an aqueous solution containing bismuth nitrate, yttrium nitrate and ferric nitrate at a molar ratio of Bi:Y:Fe = 28:10:62, and dispersed therein. The resulting dispersion was coated on a glass substrate of 3 in. in diameter and 1 mm in thickness. The coated substrate was heated to 250°C to cause decomposition of the coated dispersion, whereby an amorphous BiYFe oxide film containing rare earth-iron-garnet fine particles was formed on the glass substrate. This film had a refractive index of 2.6.

The thus obtained coating film had a thickness

of 0.5 μm.

On this coating film was formed a reflecting film of aluminum by vapor deposition method, to obtain a magneto-optical recording medium.

The recording medium was measured for angle of Faraday rotation of a light of 633 nm in a magnetic filed having a direction perpendicular to the film surface of the medium, by a method of modulating a plane of polarization. The angle was 1.0 deg.

The recording medium was also evaluated for S/N. The S/N was very high and 60 dB, and accordingly the recording medium was found to be low in noise.

Example 6

1.93 M of sodium hydroxide was dissolved in 80 ml of water. Separately, 0.030 M of bismuth nitrate, gadolinium nitrate [Gd(NO₃)₃.6H₂O), 0.023 M of dysprosium nitrate, 0.085 M of ferric nitrate and 0.016 M of aluminum nitrate were dissolved in 220 ml of a 5 N nitric acid solution. The resulting nitric acid solution was slowly added in drops to the above sodium hydroxide solution with stirring, to effect neutralization, whereby a precipitate was formed.

The precipitate was water-washed, filtered, dried and then burnt at 700°C to obtain garnet fine particles.

The garnet fine particles had a average particle diameter of 420 Å and were found, by X-ray diffraction method for powder and compositional analysis, to consist of a garnet single phase having a composition of $Dy_{1.15}Gd_{0.35}Bi_{1.5}Fe_{4.2}Al_{0.8}O_{12}$.

Also, the garnet fine particles had a refractive index of 2.6.

Using the above fine particles, a magneto-optical recording medium was produced in the same manner as in Example 5.

The recording medium was measured for angle of Faraday rotation of a light of 633 nm in a magnetic filed having a direction perpendicular to the film surface of the medium, by a method of modulating a plane of polarization. The angle was 1.0 ged.

The recording medium was also evaluated for S/N. The S/N was very high and 59 dB, and low in noise.

Example 7

1.93 M of sodium hydroxide was dissolved in 80 ml of water. Separately, 0.030 M of bismuth nitrate, 0.030 M of dysprosium nitrate, 0.085 M of ferric nitrate and 0.016 M of gallium nitrate [Ga-

(NO₃)₃.9H₂O] were dissolved in 220 ml of a 5 N nitric acid solution. The resulting nitric acid solution was slowly added in drops to the above sodium hydroxide solution with stirring, to effect neutralization, whereby a precipitate was formed.

The precipitate was water-washed, filtered, dried and then burnt at 700°C to obtain garnet fine particles.

The garnet fine particles had an average particle diameter of 420 Å and were found, by X-ray diffraction method for powder and compositional analysis, to consist of a garnet single phase having a composition of $Dy_{1.15}Bi_{1.5}Fe_{4.2}Ga_{0.8}O_{12}$.

Also, the garnet fine particles had a refractive index of 2.6.

Using the above fine particles, a magnetooptical recording medium was produced in the same manner as in Example 5.

The recording medium was measured for angle of Faraday rotation of a light of 633 nm in a magnetic filed having a direction perpendicular to the film surface of the medium, by a method of modulating a plane of polarization. The angle was 1.0 deg.

The recording medium was also evaluated for S/N. The S/N was very high and 62 dB, and low in noise.

Example 8

The same rare earth-iron-garnet fine particles as obtained in Example 5 were added to an aqueous solution containing yttrium nitrate and ferric nitrate at a molar ratio of Y:Fe = 38:62 and sufficiently dispersed therein. The resulting dispersion was coated on a glass substrate of 1 mm in thickness. The coated glass substrate was heated to 250°C to decompose the dispersion on the glass substrate, whereby an amorphous YFe oxide film containing rare earth-iron-garnet fine particles was formed on the glass substrate. This binder had a refrac tive index of 2.0.

The above film had a thickness of 0.5 μm.

On this film was formed a reflecting film of aluminum by a vapor deposition method, whereby a photomagnetic recording medium was obtained.

The recording medium was measured for angle of Faraday rotation of a light of 633 nm in a magnetic filed having a direction perpendicular to the film surface of the medium, by a method of modulating a plane of polarization. The angle was 1.0 deg.

The recording medium was also evaluated for S/N. The S/N was 50 dB.

Comparative Example 1

0.030 M of bismuth oxide [$Bi_2O_3$], 0.030 M of dysprosium oxide [$Dy_2O_3$], 0.085 M of ferric oxide [$Fe_2O_3$] and 0.016 M of aluminum oxide [$Al_2O_3$] were mixed with NaCl. The resulting mixture was burnt at 1,200°C to obtain garnet fine particles.

The garnet fine particles had an average particle diameter of 3 μm and were found, by X-ray diffraction method for powder and compositional analysis, to consist of a garnet single phase having a composition of $Dy_{1.15}Bi_{1.5}Fe_{4.2}Al_{0.8}O_{12}$.

Using the above fine particles, a magneto-optical recording medium was produced in the same manner as in Example 5.

The recording medium was measured for angle of Faraday rotation of a light of 633 nm in a magnetic filed having a direction prependicular to the film surface of the medium, by a method of modulating a plane of polarization. The angle was 0.9 deg.

The recording medium was also evaluated for S/N. The S/N was very low and 20 dB.

Comparative Example 2

An amorphous film was formed on a glass substrate of 3 in. in diameter and 1 mm in thickness, by a sputtering method using, as a target, a sintered material having a composition of $Dy_{1.5}Bi_{1.5}Fe_{4.2}Al_{0.8}O_{12}$. The amorphous film was then converted to a polycrystalline oxide thin film by heating at 630°C for 1 hour.

The above oxide thin film had a thickness of 0.4 μm. On this film was formed a reflecting film of aluminum by a vapor deposition method, whereby a photomagnetic recording medium was obtained.

The recording medium was measured for angle of Faraday rotation of a light of 633 nm in a magnetic filed having a direction perpendicular to the film surface of the medium, by a method of modulating plane of polarization. The angle was 2.0 deg.

The recording medium was also evaluated for S/N. The S/N was low and 42 dB.

Example 9

1.27 M of diethylamine [$(C_2H_5)_2NH$] was dissolved in 800 ml of water. Separately, 0.015 M of bismuth nitrate [$Bi(NO_3)_3.5H_2O$], 0.015 M of gadolinium nitrate [$Gd(NO_3)_3.6H_2O$], 0.041 M of ferric nitrate [$Fe(NO_3)_3.9H_2O$], 0.006 M of cobalt nitrate [$Co(NO_3)_2.6H_2O$] and 0.003 M of vanadium oxysulfate [$VOSO_4.5H_2O$] were dissolved in 800 ml of a 0.7 N nitric acid solution. The resulting nitric acid solution was slowly added in drops to the above diethylamine solution with stirring to effect neutralization, whereby a precipitate was formed.

The precipitate was water-washed, filtered, dried and then burnt at 730°C to obtain garnet fine particles.

The garnet fine particles had an average particle diameter of 500 Å and were found, by X-ray diffraction method for powder and compositional analysis, to consist of a garnet single phase having a composition of $Bi_{1.5}Gd_{1.5}Fe_{4.1}Co_{0.6}V_{0.3}O_{12}$.

4.5 gof the above garnet fine particles and 0.45 g of a polyoxyethylene alkyl ether type surface active agent (Hikol 02, manufactured by Nikko Chemicals K.K.) were added to a mixed organic solvent consisting of 4.5 g of toluene, 4.5 g of methyl ethyl ketone and 4.5 g of cyclohexanone. The resulting mixture was subjected to a dispersion treatment for 75 minutes by Paint Conditioner.

To the resulting dispersion were added 0.9 g of a vinyl chloride-vinyl acetate copolymer (MPR-DSA2 manufactured by Nisshin Kagaku) as a binder and a mixed organic solvent consisting of 4.5 g of toluene, 4.5 g of methyl ethyl ketone and 4.5 g of cyclohexanone. The resulting mixture was subjected to a dispersion treatment for 30 minutes by Paint Conditioner to prepare a magnetic coating.

The magnetic coating was coated on a glass substrate using a spin coater and dried in a magnetic field of 5 $kO_e$ to obtain a magneto-optical recording medium.

The recording medium was measured for angle of Faraday rotation of a light of 633 nm in a magnetic filed having a direction perpendicular to the film surface of the medium, by a method of modulating a plane of polarization. The angle was 1.0 deg.

The recording medium was also evaluated for coercive force in the vertical direction. It was 1,100 $O_e$.

Example 10

1.27 M of diethylamine was dissolved in 800 ml of water. Separately, 0.015 M of bismuth nitrate, 0.015 M of dysprosium nitrate [$Dy(NO_3)_3.5H_2O$], 0.041 M of ferric nitrate, 0.006 M of cobalt nitrate and 0.003 M of vanadium oxysulfate were dissolved in 800 ml of a 0.7 N nitric acid solution. The resulting nitric acid solution was slowly added in drops to the above diethylamine solution to effect neutralization, whereby a precipitate was formed.

The precipitate was water-washed, filtered, dried and then burnt at 730°C to obtain garnet fine particles.

The garnet fine particles had an average particle diameter of 490 Å and were found, by X-ray diffraction method for powder and compositional analysis, to consist of a garnet single phase having a composition of $Bi_{1.5}Dy_{1.5}Fe_{4.1}Co_{0.6}V_{0.3}O_{12}$.

Using the garnet fine particles, a photomagnetic recording medium was obtained in the same manner as in Example 9.

The recording medium was measured for angle of Faraday rotation of a light of 633 nm in a magnetic field having direction perpendicular to the film surface of the medium, by a method of modulating a plane of polarization. The angle was 1.0 deg.

The recording medium was also evaluated for coercive force in the vertical direction. It was 1,080 $O_e$.

Example 11

1.93 M of sodium hydroxide (NaOH) was dissolved in 80 ml of water. Separately, 0.020 m of bismuth nitrate [$Bi(NO_3)_3.5H_2O$], 0.040 M of dysprosium nitrate [$Dy(NO_3)_3.5H_2O$], 0.085 M of ferric nitrate [$Fe(NO_3)_3.9H_2O$] and 0.016 M of aluminum nitrate [$Al(NO_3)_3.9H_2O$] were dissolved in 220 ml of a 5 N nitric acid solution. The resulting nitric acid solution was slowly added in drops to the above sodium hydroxide solution with stirring to effect neutralization, whereby a precipitate was formed.

The precipitate was water-washed, filtered, dried and then burnt at 700°C to obtain garnet fine particles.

The garnet fine particles had an average particle diameter of 380 Å and were found, by X-ray dif fraction method for powder and compositional analysis, to consist of a garnet single phase having a composition of $Bi_{1.5}Dy_{2.0}Fe_{4.2}Al_{0.8}O_{12}$.

15 g of the garnet fine particles and 1.5 g of a polyoxyethylene alkyl ether type surface active agent (Hikol 02 manufactured by Nikko Chemicals K.K.) were added to 97.2 g of ethanol. The mixture was subjected to a dispersion treatment for 75 minutes by Paint Conditioner.

To the resulting dispersion were added 3.7 g of a silanol compound (Si-100000-SG manufactured by Tokyo Oka Kogyo K.K.) as a binder and a mixed organic solvent consisting of 17 g of ethyl acetate and 17 g of ethanol. The resulting mixture was subjected to a dispersion treatment for 30 minutes by Paint Conditioner, whereby a magnetic material was prepared.

The magnetic material was coated on a glass substrate using a spin coater. The coated glass substrate was heated on a hot plate at 350°C for 15 minutes to cure the binder, whereby a magneto-optical recording medium was obtained.

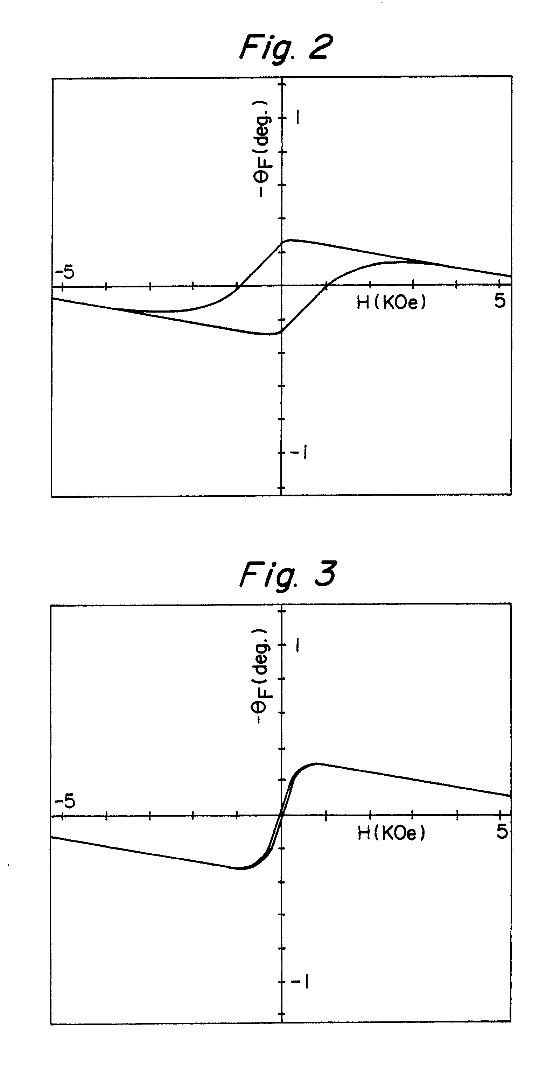

The coercive force of the recording medium was determined from the Faraday hysteresis to a light of 633 nm. It was 904 $O_e$, as shown in Fig. 2.

Comparative Example 3

15 g of the garnet fine particles obtained in Example 11 and 1.5 g of a polyoxyethylene alkyl ether type surface active agent (Hikol 02 manufactured by Nikko Chemicals K.K.) were added to a mixed organic solvent consisting of 15 g of toluene, 15 g of methyl ethyl ketone and 15 g of cyclohexanone. The resulting mixture was subjected to a dispersion treatment for 75 minutes by Paint Conditioner.

To the resulting dispersion were added 3.0 g of a vinyl chloride-vinyl acetate copolymer (VAGH manufactured by UCC) as a binder and a mixed organic solvent consisting of 15 g of toluene, 15 g of methyl ethyl ketone and 15 g of cyclohexnone). The resulting mixture was subjected to a dispersion treatment for 30 minutes by Paint Conditioner, whereby a magnetic coating was prepared.

The magnetic coating was coated on a glass substrate using a spin coater. The coated glass substrate was dried to cure the binder, whereby a photomagnetic recording medium was obtained.

The coercive force of the recording medium was determined from the Faraday hysteresis to a light of 633 nm. It was less than 1,000 $O_e$, a shown in Fig. 3.

Example 12

1.93 M of sodium hydroxide (NaOH) was dissolved in 80 ml of water. Separately, 0.020 M of bismuth nitrate [$Bi(NO_3)_3.5H_2O$], 0.040 M of dysprosium nitrate [$Dy(NO_3)_3.5H_2O$], 0.091 M of ferric nitrate [$Fe(NO_3)_3.9H_2O$] and 0.010 M of aluminum nitrate [$Al(NO_3)_3.9H_2O$] were dissolved in 220 ml of a 5 N nitric acid solution. The resulting nitric acid solution was slowly added in drops to the above sodium hydroxide solution with stirring to effect neutralization, whereby a precipitate was formed.

The precipitate was water-washed, filtered, dried and then burnt at 700°C to obtain garnet fine particles.

The garnet fine particles had an average particle diameter of 380 Å and were found, by X-ray diffraction method for powder and compositional analysis, to consist of a garnet single phase having a composition of $Bi_{1.0}Dy_{2.0}Fe_{4.5}Al_{0.5}O_{12}$.

15 g of the garnet fine particles and 1.5 g of a polyoxyethylene alkyl ether type surface active agent (Hikol 02 manufactured by Nikko Chemicals K.K.) were added to a mixed organic solvent consisting of 15 g of toluene, 15 g of methyl ethyl ketone and 15 g of cyclo hexanone. The resulting mixture was subjected to a dispersion treatment for 75 minutes by Paint Conditioner.

To the resulting dispersion were added 3.0 g of a vinyl chloride-vinyl acetate copolymer (MPR-DSA2 manufactured by Nisshin Kagaku) as a binder and a mixed organic solvent consisting of 15 g of toluene, 15 g of methyl ethyl ketone and 15 g of cyclohexanone. The resulting mixture was subjected to a dispersion treatment for 30 minutes by Paint Conditioner, whereby a magnetic coating was prepared.

The magnetic coating was coated on an ultraviolet-curing resin substrate using a spin coater and dried.

The resulting substrate having a magnetic coating thereon was exposed to ultraviolet rays at the substrate side to cure the substrate, whereby a photomagnetic recording medium was obtained.

The coercive force of the recording medium was determined from the Faraday hysteresis to a light of 633 nm. It was 428 $O_e$.

Comparative Example 4

Using the garnet fine particles obtained in Example 12, a magnetic coating was prepared in the same manner as in Example 12.

The magnetic coating was coated on a glass substrate using a spin coater and dried to obtain a magneto-optical recording medium.

The coercive force of the recording medium was determined from the Faraday hysteresis to a light of 633 nm. It was less than 100 $O_e$.

## Claims

1. Rare earth-iron-garnet fine particles represented by the general formula

$$R_a Bi_b Fe_c M_d O_e \quad (I)$$

(in the formula,
R represents at least one rare earth element selected from the group consisting of Y and lanthanum series elements,
M represents at least one element selected from the group consisting of Al, Ga, Cr, Mn, Sc, In, Ru, Rh, Co, Fe(II), Cu, Ni, Zn, Li, Si, Ge, Zr, Ti, Hf, Sn, Pb, Mo, V, Nb and Ta,
a is a number of 0.5 to 3.5,
b is a number of 0 to 2.5,
c is a number of 3.0 to 6.0,
d is a number of 0 to 2.0,
The sum of a, b, c and d is in the range of 7.0 to 8.0,
the sum of a and b is in the range of 2.0 to 3.5,
the sum of c and d is in the range of 4.0 to 6.0, and
e is the ratio of the number of oxygen atoms sufficient for valence compensation)
and having an average particle diameter in the range of 30 Å to 1,000 Å.

2. Rare earth-iron-garnet fine particles according to Claim 1, wherein the average particle diameter is in the range of 100 Å to 600 Å.

3. Rare earth-iron-garnet fine particles according to Claim 1, wherein the average particle diameter is in the range of 100 Å to 500 Å.

4. Rare earth-iron-garnet fine particles according to Claim 1, wherein R is at least one rare earth element selected from the group consisting of Y, La, Ce, Nd, Sm, Gd, Tb, Dy and Yb.

5. Rare earth-iron-garnet fine particles according to Claim 1, wherein R is at least one rare earth element selected from the group consisting of Y, Ce, Gd, Tb and Dy.

6. Rare earth-iron-garnet fine particles according to Claim 1, wherein M is at least one element selected from the group consisting of Al, Ga, Cr, In, Rh, Co, Si, Ge, Ti and V.

7. Rare earth-iron-garnet fine particles according to Claim 1, wherein a is 0.5 - 2.5.

8. Rare earth-iron-garnet fine particles according to Claim 1, wherein a is 1.0 - 2.0.

9. Rare earth-iron-garnet fine particles according to Claim 1, wherein b is 0.5 - 2.5.

10. Rare earth-iron-garnet fine particles according to Claim 1, wherein b is 1.0 - 2.0.

11. Rare earth-iron-garnet fine particles according to Claim 1, wherein c is 3.5 - 5.0.

12. Rare earth-iron-garnet fine particles according to Claim 1, wherein c is 3.8 - 5.0.

13. Rare earth-iron-garnet fine particles according to Claim 1, wherein d is 0 - 1.5.

14. Rare earth-iron-garnet fine particles according to Claim 1, wherein d is 0 - 1.2.

15. Rare earth-iron-garnet fine particles according to Claim 1, wherein the sum of a, b, c and d is 7.2 -8.0.

16. Rare earth-iron-garnet fine particles according to Claim 1, wherein the sum of a, b, c and d is 7.5 -8.0.

17. Rare earth-iron-garnet fine particles according to Claim 1, wherein the sum of a and b is 2.5 - 3.5.

18. Rare earth-iron-garnet fine particles according to Claim 1, wherein the sum of a and b is 3.0 - 3.5.

19. Rare earth-iron-garnet fine particles according to Claim 1, wherein the sum of c and d is 4.0 - 5.5.

20. Rare earth-iron-garnet fine particles according to Claim 1, wherein the sum of c and d is 4.2 - 5.0.

21. A magneto-optical material comprising rare earth-iron-garnet fine particles according to Claim 1 and an inorganic or organic binder in which said fine particles are dispersed.

22. A magneto-optical material according to Claim 21, wherein the inorganic or organic binder has a refractive index deviating from the refractive index of the rare earth-iron-garnet fine particles by not more than ± 20 % of the latter refractive index.

23. A magneto-optical apparatus comprising rare earth-iron-garnet fine particles according to Claim 1 and an inorganic or organic binder in which said fine particles are dispersed.

24. A magneto-optical apparatus according to Claim 23, selected from the group consisting of an optical isolator, an optical circulator, an optical switch, an optical waveguide and an optical memory.

25. A magneto-optical apparatus according to Claim 23, wherein the inorganic or organic binder has a refractive index deviating from the refractive index of the rare earth-iron-garnet fine particles by not more than ± 20 % of the latter refractive index.

26. A magneto-optical recording medium comprising a substrate and a magneto-optical layer applied thereon, comprising rare earth-iron-garnet fine particles according to Claim 1 and an inorganic or organic binder in which said fine particles are dispersed.

27. A magneto-optical recording medium according to Claim 26, wherein the rare earth-iron-garnet fine particles are represented by the general formula

$$R_aBi_bFe_cM_dO_e \qquad (I)$$

(in the formula,

R represents at least one rare earth element selected from the group consisting of Y and lanthanum series elements,

M represents at least one element selected from the group consisting of Al, Ga, Cr, Mn, Sc, In, Ru, Rh, Co, Fe (II), Cu, Ni, Zn, Li, Si, Ge, Zr, Ti, Hf, Sn, Pb, Mo, V, Nb and Ta,

a is a number of 0.5 to 3.0,

b is a number of 0.25 to 2.5,

c is a number of 3.0 to 5.0,

d is a number of 0 to 2.0,

the sum of a, b, c and d is in the range of 7.0 to 8.0,

the sum of a and b is in the range of 2.0 to 3.5,

the sum of c and d is in the range of 4.0 to 6.0, and

e is the ratio of the number of oxygen atoms sufficient for valence compensation)

and having an average particle diameter in the range of 30 Å to 1,000 Å.

28. A magneto-optical recording medium according to Claim 27, wherein the rare earth-iron-garnet fine particles have an average particle diameter in the range of 100 Å to 600 Å.

29. A magneto-optical recording medium according to Claim 27, wherein the rare earth-iron-garnet fine particles have an average particle diameter in the range of 100 Å to 500 Å.

30. A magneto-optical recording medium according to Claim 27, wherein a is 1.0 - 2.0.

31. A magneto-optical recording medium according to Claim 27, wherein b is 1.0 - 2.0.

32. A magneto-optical recording medium according to Claim 27, wherein c is 3.8 - 5.0.

33. A magneto-optical recording medium according to Claim 27, wherein d is 0 - 1.2.

34. A magneto-optical recording medium according to Claim 27, wherein the rare earth-iron-garnet fine particles are represented by the following formula

$R_aBi_bFe_cM^1_\alpha M^2_\beta O_e$

in the formula,

$M^1$ represents at least one element selected from the group consisting of Co and Ru,

$M^2$ represents at least one element selected from the group consisting of Al, Ga, Cr, Mn, Sc, In, Ru, Rh, Fe (II), Cu, Ni, Zn, Li, Si, Ge, Zr, Ti, Hf, Sn, Pb, Mo, V, Nb and Ta,

$\alpha$ is a number of 0.1 to 2.0,

$\beta$ is a number of 0 to 2.0,

the sum of $\alpha$ and $\beta$ is in the range of 0.1 to 2.0, and

R, a, b, c and e have the same definitions as above.

35. A magneto-optical recording medium according to Claim 34, wherein $\alpha$ is 0.2 - 1.5.

36. A magneto-optical recording medium according to Claim 34, wherein $\alpha$ is 0.2 - 1.0.

37. A magneto-optical recording medium according to Claim 34, wherein $\beta$ is 0.1 - 1.5.

38. A magneto-optical recording medium according to Claim 34, wherein $\beta$ is 0.1 - 1.0.

39. A magneto-optical recording medium according to Claim 34, wherein the sum of $\alpha$ and $\beta$ is 0.3 - 1.5.

40. A magneto-optical recording medium according to Claim 26, wherein the substrate causes shrinkage or expansion when exposed to ultraviolet rays, radiations, etc.

41. A magneto-optical recording medium according to Claim 26, wherein the binder causes shrinkage or expansion when cured.

42. A magneto-optical recording medium according to Claim 26, wherein the rare earth-iron-garnet fine particles have vertical magnetic anisotropy caused by inverse-magnetostrictive effect.

43. A magneto-optical recording medium according to Claim 26, wherein the rare earth-iron-garnet fine particles have been orientated in a direction perpendicular to the substrate, by an external magnetic force.

## Fig. 1

2θ (°)

## *Fig. 2*

## *Fig. 3*